(19) 

**Europäisches Patentamt**
**European Patent Office**
**Office européen des brevets**

(11) **EP 1 717 282 B1**

(12) **EUROPEAN PATENT SPECIFICATION**

(45) Date of publication and mention
of the grant of the patent:
**30.12.2009 Bulletin 2009/53**

(51) Int Cl.:
***C09D 11/00*** *(2006.01)*

(21) Application number: **05103161.5**

(22) Date of filing: **20.04.2005**

(54) **Pigmented inkjet ink with a polymeric dispersant containing a long aliphatic chain (meth)acrylate**

Pigmentierte Tintenstrahltinten mit einem polymeren Dispersionsmittel, welches ein langkettiges aliphatisches (Meth)Acrylat enthält

Encre d'impression par jet d'encre contenant un agent dispersant polymère contenant un (meth)acrylate à base d'une chaîne longue aliphatique

(84) Designated Contracting States:
**DE FR GB**

(43) Date of publication of application:
**02.11.2006 Bulletin 2006/44**

(73) Proprietor: **Agfa Graphics N.V.**
**2640 Mortsel (BE)**

(72) Inventors:
• **Deroover, Geert**
**AGFA-GEVAERT**
**2640, Mortsel (BE)**
• **Groenendaal, Lambertus**
**AGFA GEVAERT**
**2640, Mortsel (BE)**

(74) Representative: **Goedeweeck, Rudi et al**
**Agfa Graphics N.V.**
**IP Department 3622**
**Septestraat 27**
**2640 Mortsel (BE)**

(56) References cited:
**US-A- 3 980 602      US-A- 4 762 867**
**US-B1- 6 652 634**

• **PATENT ABSTRACTS OF JAPAN vol. 009, no. 293 (C-315), 20 November 1985 (1985-11-20) -& JP 60 135461 A (KANSAI PAINT KK), 18 July 1985 (1985-07-18)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present invention relates to stable pigmented inkjet inks with a polymeric dispersant containing a long chain (meth)acrylate.

**Background art**

Pigment dispersions are made using a dispersant. A dispersant is a substance for promoting the formation and stabilization of a dispersion of pigment particles in a dispersion medium. Dispersants are generally surface-active materials having an anionic, cationic or non-ionic structure. The presence of a dispersant substantially reduces the dispersing energy required. Dispersed pigment particles may have a tendency to re-agglomerate after the dispersing operation, due to mutual attraction forces. The use of dispersants also counteracts this re-agglomeration tendency of the pigment particles.

The dispersant has to meet particularly high requirements when used for inkjet inks. Inadequate dispersing manifests itself as increased viscosity in liquid systems, loss of brilliance and/or hue shifts. Moreover, particularly good dispersion of the pigment particles is required to ensure unimpeded passage of the pigment particles through the nozzles of the print head which are usually only a few micrometers in diameter. In addition, pigment particle agglomeration and the associated blockage of the printer nozzles has to be avoided in the standby periods of the printer.

Polymeric dispersants contain in one part of the molecule so-called anchor groups, which adsorb onto the pigments to be dispersed. In a spatially separate part of the molecule, polymeric dispersants have a polymer chain which sticks out and whereby pigment particles are made compatible with the dispersion medium, i.e. stabilized.

The properties of polymeric dispersants depend on both the nature of the monomers and their distribution in the polymer. Polymeric dispersants obtained by randomly polymerizing monomers (e.g. monomers A and B polymerized into ABBAABAB) or by polymerizing alternating monomers (e.g. monomers A and B polymerized into ABABABAB) generally result in a poor dispersion stability. Improvements in dispersion stability were obtained using graft copolymer and block copolymer dispersants.

Graft copolymer dispersants consist of a polymeric backbone with side chains attached to the backbone. CA 2157361 (DU PONT) discloses pigment dispersions made by using a graft copolymer dispersant with a hydrophobic polymeric backbone and hydrophilic side chains.

Other graft copolymer dispersants are disclosed in US 6652634 (LEXMARK), US 6521715 (DU PONT) and US 2004102541 (LEXMARK).

Block copolymer dispersants containing hydrophobic and hydrophilic blocks have been disclosed in numerous inkjet ink patents.

US 5859113 (DU PONT) discloses an AB block copolymer dispersant with a polymeric A segment of polymerized glycidyl (meth)acrylate monomers reacted with an aromatic or aliphatic carboxylic acid, and a polymeric B segment of polymerized alkyl (meth)acrylate monomers having 1-12 carbon atoms in the alkyl group, hydroxy alkyl (meth)acrylate monomers.

US 6413306 (DU PONT) discloses ABC block copolymer dispersants with a polymeric A segment of polymerized alkyl (meth)acrylate monomers having 1-12 carbon atoms in the alkyl group, aryl (meth)acrylate monomers, cycloalkyl (meth) acrylate monomers, a polymeric B segment of polymerized alkyl amino alkyl(meth)acrylate monomers with a quaternized alkyl group, and a polymeric C segment of polymerized hydroxyalkyl (meth)acrylate monomers.

The design of polymeric dispersants for inkjet inks is discussed in SPINELLI, Harry J.. Polymeric Dispersants in Ink Jet Technology. Advanced Materials. 1998, vol.10, no.15, p.1215-1218.

A wide variety of polymeric dispersants has been proposed, but the dispersion stability of pigments, especially in inkjet, still needs further improvement. For consistent image quality, the inkjet ink requires a dispersion stability capable of dealing with high temperatures (above 60°C) during transport of the ink to a customer and changes in the dispersion medium of the inkjet ink during use, for example, evaporation of water and increasing concentrations of humectant. It is highly desirable to be able to manufacture such stable pigmented inkjet inks using a polymeric dispersant obtained by a simple synthesis, i.e. by randomly polymerizing monomers.

**Objects of the invention**

It is an object of the present invention to provide pigmented inkjet inks using a polymeric dispersant obtained by simple synthesis, exhibiting high dispersion stability and producing images of high image quality with a high optical density.

Further objects of the invention will become apparent from the description hereinafter.

## Summary of the invention

It has been surprisingly found that pigmented inkjet inks with high stability and high optical density were obtained when the statistical copolymers contained a certain concentration of long aliphatic chain (meth)acrylate .

Objects of the present invention have been realized with a pigmented inkjet ink comprising a pigment and a polymeric dispersant wherein the polymeric dispersant is a statistical copolymer comprising between 3 and 11 mol% of a long aliphatic chain (meth)acrylate wherein the long aliphatic chain contains at least 10 carbon atoms.

Further advantages and embodiments of the present invention will become apparent from the following description.

## Detailed description of the invention

Definitions

The term "dye", as used in disclosing the present invention, means a colorant having a solubility of 10 mg/L or more in the medium in which it is applied and under the ambient conditions pertaining.

The term "pigment" is defined in DIN 55943, herein incorporated by reference, as an inorganic or organic, chromatic or achromatic colouring agent that is practically insoluble in the application medium under the pertaining ambient conditions, hence having a solubility of less than 10 mg/L therein.

The term "dispersion", as used in disclosing the present invention, means an intimate mixture of at least two substances, one of which, called the dispersed phase or colloid, is uniformly distributed in a finely divided state through the second substance, called the dispersion medium.

The term "polymeric dispersant", as used in disclosing the present invention, means a substance for promoting the formation and stabilization of a dispersion of a substance in a dispersion medium.

The term " copolymer", as used in disclosing the present invention, means a macromolecule in which two or more different species of monomers are incorporated into a polymer chain.

The term "statistical copolymer", as used in disclosing the present invention, means a copolymer obtained by randomly polymerizing monomers , e.g. monomers A and B polymerized into ABBAABAB.

The term " block copolymer", as used in disclosing the present invention, means a copolymer in which the monomers occur in relatively long alternate sequences in a chain.

The term "spectral separation factor" as used in disclosing the present invention means the value obtained by calculating the ratio of the maximum absorbance $A_{max}$ (measured at wavelength $\lambda_{max}$) over the absorbance $A_{ref}$ determined at a reference wavelength $\lambda_{ref}$.

The abbreviation "SSF" is used in disclosing the present invention for spectral separation factor.

The term "alkyl" means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl etc.

The term "substituted" as used in disclosing this present invention means that one or more of the carbon atoms and/or that a hydrogen atom of one or more of carbon atoms in an aliphatic group, an aromatic group or an alicyclic hydrocarbon group, are replaced by an oxygen atom, a nitrogen atom, a halogen atom, a silicon atom, a sulphur atom, a phosphorous atom, selenium atom or a tellurium atom. Such substituents include hydroxyl groups, ether groups, carboxylic acid groups, ester groups, amide groups and amine groups.

Pigmented inkjet ink

The pigmented inkjet ink according to the present invention contains at least three components: (i) a pigment, (ii) a polymeric dispersant, and (iii) a dispersion medium.

The pigmented inkjet ink according to the present invention may further contain at least one surfactant.

The pigmented inkjet ink according to the present invention may further contain at least one biocide.

The pigmented inkjet ink according to the present invention may further contain at least one pH adjuster.

The pigmented inkjet ink according to the present invention may contain at least one humectant to prevent the clogging of the nozzle, due to its ability to slow down the evaporation rate of ink.

The viscosity of the pigmented inkjet ink according to the present invention is preferably lower than 100 mPa.s, more preferably lower than 30 mPa.s, and most preferably lower than 10 mPa.s at a shear rate of 100 s$^{-1}$ and a temperature between 20 and 110°C.

The pigmented inkjet ink according to the present invention is preferably an aqueous or solvent based pigmented inkjet ink.

The pigmented inkjet ink according to the present invention may be radiation curable and may contain monomers, oligomers and/or prepolymers possessing different degrees of functionality. A mixture including combinations of mono-, di-, tri-and higher functionality monomers, oligomers or prepolymers may be used. A catalyst called a photo-initiator for initiating the polymerization reaction may be included in the radiation curable pigmented inkjet ink.

Pigments

The pigment used in the pigmented inkjet ink according to the present invention may be black, cyan, magenta, yellow, red, orange, violet, blue, green, brown, mixtures thereof, and the like.

The pigment may be chosen from those disclosed by HERBST, W, et al. Industrial Organic Pigments, Production, Properties, Applications. 2nd edition. vch, 1997.

Particular preferred pigments are C.I. Pigment Yellow 1, 3, 10, 12, 13, 14, 17, 55, 65, 73, 74, 75, 83, 93, 109, 111, 120, 128, 138, 139, 150, 151, 154, 155, 180,185 and 213.

Particular preferred pigments are C.I. Pigment Red 17, 22, 23, 41, 48:1, 48:2, 49:1, 49:2, 52:1, 57:1, 81:1, 81: 3, 88, 112, 122, 144, 146, 149, 169,170, 175, 176, 184, 185, 188, 202, 206, 207, 210, 216, 221, 248, 251 and 264.

Particular preferred pigments are C.I. Pigment Violet 1, 2, 19, 23, 32, 37 and 39.

Particular preferred pigments are C.I. Pigment Blue 15:1, 15:2, 15:3, 15:4, 16, 56, 61 and (bridged) aluminum phthalocyanine pigments.

Particular preferred pigments are C.I. Pigment Orange 5, 13, 16, 34, 40, 43, 59, 66, 67, 69, 71 and 73.

Particular preferred pigments are C.I. Pigment Green 7 and 36.

Particular preferred pigments are C.I. Pigment Brown 6 and 7.

Particular preferred pigments are C.I. Pigment White 6.

Particular preferred pigments are C.I. Pigment Metal 1, 2 and 3.

For the black ink, suitable pigment materials include carbon blacks such as Regal™ 400R, Mogul™ L, Elftex™ 320 from Cabot Co., or Carbon Black FW18, Special Black™ 250, Special Black™ 350, Special Black™ 550, Printex™ 25, Printex™ 35, Printex™ 55, Printex™ 90, Printex™ 150T from DEGUSSA Co., MA8 from MITSUBISHI CHEMICAL Co., and C.I. Pigment Black 7 and C.I. Pigment Black 11.

The pigment particles in the pigmented inkjet ink should be sufficiently small to permit free flow of the ink through the inkjet printing device, especially at the ejecting nozzles. It is also desirable to use small particles for maximum colour strength and to slow down sedimentation.

The average particle size of the pigment in the pigmented inkjet ink should be between 0.005 $\mu$m and 15 $\mu$m. Preferably, the average pigment particle size is between 0.005 and 5 $\mu$m, more preferably between 0.005 and 1 $\mu$m, particularly preferably between 0.005 and 0.3 $\mu$m and most preferably between 0.040 and 0.150 $\mu$m. Larger pigment particle sizes may be used as long as the objectives of the present invention are achieved.

The pigment is used in the pigmented inkjet ink in an amount of 0.1 to 20 wt%, preferably 1 to 10 wt% based on the total weight of the pigmented inkjet ink.

Polymeric dispersant

The polymeric dispersant used in the pigmented inkjet ink according to the present invention is a copolymer comprising between 3 and 11 mol% of a long aliphatic chain (meth)acrylate wherein the long aliphatic chain contains at least 10 carbon atoms.

The long aliphatic chain (meth)acrylate contains 10 to 18 carbon atoms.The long aliphatic chain (meth)acrylate is preferably decyl (meth)acrylate.

The polymeric dispersant used in the pigmented inkjet ink according to the present invention can be prepared with a simple controlled polymerization of a mixture of monomers and/or oligomers including between 3 and 11 mol% of a long aliphatic chain (meth)acrylate wherein the long aliphatic chain contains at least 10 carbon atoms.

The polymeric dispersant used in the pigmented inkjet ink according to the present invention comprises preferably at least 2 other monomers and/or oligomers.

The polymeric dispersant used in the pigmented inkjet ink according to the present invention preferably has an average molecular weight Mw smaller than 100000, more preferably smaller than 50000 and most preferably smaller than 30000.

Other monomers and/or oligomers

The monomers and/or oligomers used to prepare the polymeric dispersant used in the pigmented inkjet ink according to the present invention can be any monomer and/or oligomer found in the Polymer Handbook, Vol. 1 + 2. 4th edition. Edited by J. BRANDRUP, et al. Wiley-Interscience , 1999.

Suitable examples of monomers include: acrylic acid, methacrylic acid, maleic acid, acryloyloxybenzoic acid and methacryloyloxybenzoic acid (or their salts), maleic anhydride; alkyl(meth)acrylates (linear, branched and cycloalkyl) such as methyl(meth)acrylate, n-butyl(meth)acrylate, tert-butyl(meth)acrylate, cyclohexyl(meth)acrylate and 2-ethylhexyl (meth)acrylate; aryl(meth)acrylates such as benzyl(meth)acrylate and phenyl(meth)acrylate; hydroxyalkyl(meth)acrylates such as hydroxyethyl(meth)acrylate and hydroxypropyl(meth)acrylate; (meth)acrylates with other types of functionalities (e.g. oxirane, amino, fluoro, polyethylene oxide, phosphate-substituted) such as glycidyl (meth)acrylate, dimethylaminoethyl(meth)acrylate, trifluoroethyl acrylate, methoxypolyethyleneglycol (meth)acrylate and tripropyleneglycol(meth)acrylate phosphate; allyl derivatives such as allyl glycidyl ether; styrenics such as styrene, 4-methylstyrene, 4-hydroxystyrene, and 4-acetoxystyrene; (meth)acrylonitrile; (meth)acrylamides (including N-mono and N,N-disubstituted) such as N-benzyl (meth)acrylamide; maleimides such as N-phenyl maleimide, N-benzyl maleimide and N-ethyl maleimide; vinyl derivatives such as vinylcaprolactam, vinylpyrrolidone, vinylimidazole, vinylnaphthalene and vinyl halides; vinylethers such as vinylmethyl ether; and vinylesters of carboxylic acids such as vinylacetate and vinylbutyrate.

The polymeric dispersant used in the pigmented inkjet ink according to the present invention comprises preferably at least 25 mol% n-butyl (meth)acrylate.

The polymeric dispersant used in the pigmented inkjet ink according to the present invention comprises preferably at least 25 mol% (meth)acrylic acid.

The polymeric dispersant used in the pigmented inkjet ink according to the present invention comprises preferably at least 5 mol% methyl (meth)acrylate.

The polymeric dispersant used in the pigmented inkjet ink according to the present invention preferably has Mn smaller than 10000.

An example of a commercially available polymeric dispersant suitable for the pigmented inkjet ink according to the present invention is EDAPLAN™ 482 available from MÜNZING CHEMIE, which contains about 6 mol% of a long aliphatic chain (meth)acrylate.

The polymeric dispersant is used in the pigmented inkjet ink in an amount of 5 to 200 wt%, preferably 10 to 100 wt% based on the weight of the pigment.

Dispersion medium

The dispersion medium used in the pigmented inkjet ink according to the present invention is a liquid. The dispersion medium may consist of water and/or organic solvent(s). Preferably the dispersion medium is water.

If the pigmented inkjet ink is a radiation curable pigmented inkjet ink, water and/or organic solvent(s) are replaced by one or more monomers and/or oligomers to obtain a liquid dispersion medium. Sometimes, it can be advantageous to add a small amount of an organic solvent to improve the dissolution of the dispersant. The content of organic solvent should be lower than 20 wt% based on the total weight of the pigmented inkjet ink.

Suitable organic solvents include alcohols, aromatic hydrocarbons, ketones, esters, aliphatic hydrocarbons, higher fatty acids, carbitols, cellosolves, higher fatty acid esters. Suitable alcohols include, methanol, ethanol, propanol and 1-butanol, 1-pentanol, 2-butanol, t.-butanol. Suitable aromatic hydrocarbons include toluene, and xylene. Suitable ketones include methyl ethyl ketone, methyl isobutyl ketone, 2,4-pentanedione and hexafluoroacetone. Also glycol, glycolethers, N-methylpyrrolidone, N,N-dimethylacetamid, N, N-dimethylformamid may be used.

Surfactant

The pigmented inkjet ink according to the present invention may contain at least one surfactant. The surfactant(s) can be anionic, cationic, non-ionic, or zwitter-ionic and are usually added in a total quantity less than 20 wt% based on the total weight of the pigmented inkjet ink and particularly in a total less than 10 wt% based on the total weight of the pigmented inkjet ink.

Suitable surfactants for the pigmented inkjet ink according to the present invention include fatty acid salts, ester salts of a higher alcohol, alkylbenzene sulphonate salts, sulphosuccinate ester salts and phosphate ester salts of a higher alcohol (for example, sodium dodecylbenzenesulphonate and sodium dioctylsulphosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.).

Biocides

Suitable biocides for the pigmented inkjet ink of the present invention include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are Bronidox™ available from HENKEL and Proxel™ GXL available from ZENECA COLOURS.

A biocide is preferably added in an amount of 0.001 to 3 wt.%, more preferably 0.01 to 1.00 wt. %, each based on the total weight of the pigmented inkjet ink.

pH adjusters

The pigmented inkjet ink according to the present invention may contain at least one pH adjuster. Suitable pH adjusters include NaOH, KOH, $NEt_3$, $NH_3$, HCl, $HNO_3$ , $H_2SO_4$ and (poly)alkanolamines such as triethanolamine and 2-amino-2-methyl-1-propaniol. Preferred pH adjusters are NaOH and $H_2SO_4$.

Humectants

Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. Preferred humectants are glycerol and 1,2-hexanediol. The humectant is preferably added to the inkjet ink formulation in an amount of 0.1 to 20 wt% of the formulation, more preferably 0.1 to 10 wt% of the formulation, and most preferably approximately 4.0 to 6.0 wt%.

Preparation of a pigmented inkjet ink

The pigmented inkjet ink according to the present invention may be prepared by precipitating or milling the pigment in the dispersion medium in the presence of the polymeric dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Methods for preparation of very fine dispersions of pigments are disclosed in e.g. US 5679138 (KODAK), US 5538548 (BROTHER), US 5443628 (VIDEOJET SYSTEMS), US 4836852 (OLIVETTI), US 5285064 (EXTREL), US 5184148 (CANON) and US 5223026 (XEROX).

Spectral Separation Factor

The spectral separation factor SSF was found to be an excellent measure to characterize a pigmented inkjet ink, as it takes into account properties related to light-absorption (e.g. wavelength of maximum absorbance $\lambda_{max}$ , shape of the absorption spectrum and absorbance-value at $\lambda_{max}$) as well as properties related to the dispersion quality and stability.

A measurement of the absorbance at a higher wavelength gives an indication on the shape of the absorption spectrum. The dispersion quality can be evaluated based on the phenomenon of light scattering induced by solid particles in solutions. When measured in transmission, light scattering in pigment inks may be detected as an increased absorbance at higher wavelengths than the absorbance peak of the actual pigment. The dispersion stability can be evaluated by comparing the SSF before and after a heat treatment of e.g. a week at 80°C.

The spectral separation factor SSF of the ink is calculated by using the data of the recorded spectrum of an ink solution or a jetted image on a substrate and comparing the maximum absorbance to the absorbance at a reference wavelength. The spectral separation factor is calculated as the ratio of the maximum absorbance $A_{max}$ over the absorbance $A_{ref}$ at a reference wavelength.

$$SSF = \frac{A_{max}}{A_{ref}}$$

The SSF is an excellent tool to design inkjet ink sets with large colour gamut. Often inkjet ink sets are now commercialized, wherein the different inks are not sufficiently matched with each other. For example, the combined absorption of all inks does not give a complete absorption over the whole visible spectrum, e.g. "gaps" exist between the absorption spectra of the colorants. Another problem is that one ink might be absorbing in the range of another ink. The resulting colour gamut of these inkjet ink sets is low or mediocre.

## EXAMPLES

Materials

All materials used in the following examples were readily available from standard sources such as Aldrich Chemical Co. (Belgium) and Acros (Belgium) unless otherwise specified.

The water used was deionized water.

Inkjet Magenta™ EO2VP2621 is C.I. Pigment Red 122 available from CLARIANT.

AA is acrylic acid from from Acros.

MAA is methacrylic acid from Acros.

MMA is methyl methacrylate from Acros.

BnMA is benzylmethacrylate from Acros.

BuA is n-butylacrylate from Acros.

BuMA is n-butyl methacrylate from Acros.

MPEGMA is an abbreviation for methoxypolyethyleneglycol 350 methacrylate from Cognis Performance Chemicals under the tradename of Bisomer™ MPEG 350MA.

EHA is 2-ethyl hexyl acrylate from Acros.

STY is styrene from Acros.

LCMA is decyl methacrylate from Fluka.

WAKO™ V601 is the initiator 2-(1-Methoxycarbonyl-1-methyl-ethyl azo)-2-methyl-propionic acid methyl ester from Wako.

IPA is isopropanol from Lamers & Pleuger.

$\alpha$-MSTY is $\alpha$-methylstyrene dimer from Goi Chemical Co.

Measurement methods

1. SSF factor

The spectral separation factor SSF was calculated as the ratio of the maximum absorbance $A_{max}$ (measured at wavelength $\lambda_{max}$) over the absorbance $A_{ref}$ determined at the reference wavelength of $\lambda_{max}+200$ nm.

The absorbance was determined in transmission with a Hewlett Packard 8452A Diode Array spectrophotometer. The ink was diluted to have a pigment concentration of 0.005%. A spectrophotometric measurement of the UV-VIS-NIR absorption spectrum of the diluted ink was performed in transmission-mode with a double beam-spectrophotometer using the settings of Table 1. Quartz cells with a path length of 10 mm were used and water was chosen as a blank.

**Table 1**

| Mode | Absorbance |
|---|---|
| Wavelength range | 240-1100 nm |
| Slit width | 3.0 nm |
| Scan interval | 1.0 nm |
| Detector | photo-multiplier(UV-VIS) PbS-detektor (NIR |

Efficient pigmented inkjet inks exhibiting a narrow absorption spectrum and a high maximum absorbance have a value for SSF of at least 30.

2. Dispersion stability

The dispersion stability was evaluated by comparing the SSF before and after a heat treatment of one week at 80°C. Pigmented inkjet inks exhibiting good dispersion stability have a SSF after heat treatment still larger than 30 and preferably a % reduction in SSF smaller than 20%.

3. Polymer analysis

All polymers have been characterized with gel permeation chromatography (GPC) and nuclear magnetic resonance spectroscopy (NMR). Random or block copolymers were analyzed with NMR by dissolving them in a deuterated solvent. For $^1$H-NMR $\pm$ 20 mg polymer was dissolved in 0.8 mL CDCl$_3$ or DMSO-d6 or acetonitrile-d3 or D$_2$O (with or

without NaOD addition). Spectra were recorded on a Varian Inova 400 MHz instrument equipped with an ID-probe. For $^{13}$C-NMR $\pm$ 200 mg polymer was dissolved in 0.8 mL CDCl$_3$ or DMSO-d6 or acetonitrile-d3 or D$_2$O (with or without NaOD addition). Spectra were recorded on a Varian Gemini2000 300 MHz equipped with a SW-probe.

$M_n$, $M_w$, $M_z$ and polydispersity (pd) values were measured using gel permeation chromatography. For polymers dissolvable in organic solvents PL-mixed B columns (Polymer Laboratories Ltd) were used with THF+5% acetic acid as mobile phase using polystyrene with known molecular weights as calibration standards. These polymers were dissolved in the mobile phase at a concentration of 1mg/mL. For polymers dissolvable in water PL Aquagel OH-60, OH-50, OH-40 and/or OH-30 (Polymer Laboratories Ltd) column combinations were used depending on the molecular weight region of the polymers under investigation. As mobile phase water/methanol mixtures adjusted to pH 9.2 with e.g. disodiumhydrogen phosphate were used with or without the addition of neutral salts e.g. sodium nitrate. As calibration standards polyacrylic acids with known molecular weights were used. The polymers were dissolved in either water or water made basic with ammonium hydroxide at a concentration of 1 mg/mL. Refractive index detection was used.

An example is now given to illustrate the calculation of the average composition of a random (= statistical) copolymer P(MAA-c-EHA).

The M n of the copolymer was determined with GPC to be 5000.

The molar percentage of each monomer type by NMR was determined to be: 45 mol% MAA and 55 mol% EHA.

Calculation:

$$(0.45 \times M_{MAA}) + (0.55 \times M_{EHA}) = 140.09$$

5000 / 140.09 = total number of monomeric units in average polymer chain = 36

$$\text{Average number of MAA units} = 0.45 \times (5000/140.09) = 16 \text{ units}$$

$$\text{Average number of EHA units} = 0.55 \times (5000/140.09) = 20 \text{ units}$$

Thus, the average composition is P(MAA$_{16}$-c-EHA$_{20}$).

4. Particle size

The particle size of pigment particles in pigmented inkjet ink was determined by photon correlation spectroscopy at a wavelength of 633 nm with a 4mW HeNe laser on a diluted sample of the pigmented inkjet ink. The particle size analyzer used was a Malvern™ nano-S available from Goffin-Meyvis.

The sample was prepared by addition of one drop of ink to a cuvet containing 1.5 mL water and mixed until a homogenous sample was obtained. The measured particle size is the average value of 3 consecutive measurements consisting of 6 runs of 20 seconds. For good ink jet characteristics (jetting characteristics and print quality) the average particle size of the dispersed particles is preferably below 150 nm.

**Example 1**

This example illustrates the high quality, i.e. a large colour gamut (high SSF), and the high stability of a pigmented magenta inkjet ink containing a long aliphatic chain (meth)acrylate.

Synthesis of statistical copolymers

Polymeric dispersants POL-1 to POL-8 with different compositions were synthesized. The polymeric dispersants POL-6 to POL-8 contained a long aliphatic chain methacrylate (LCMA).

**Table 2**

| Amount (g) | POL-1 | POL-2 | POL-3 | POL-4 | POL-5 | POL-6 | POL-7 | POL-8 |
|---|---|---|---|---|---|---|---|---|
| AA | - | - | - | - | 14.24 | 14.94 | 14.94 | 11.25 |
| MAA | 3.37 | 1.74 | 18.02 | 8.53 | - | - | - | - |
| MMA | - | - | - | - | 5.65 | 5.74 | 5.74 | 4.26 |
| BnMA | 4.28 | 5.60 | 20.02 | - | - | - | - | - |
| BuMA | 3.33 | - | - | 14.96 | - | - | - | - |
| BuA | - | - | - | - | 19.10 | 20.33 | 20.33 | 15.45 |
| MPEGMA | - | 2.48 | 20.93 | 14.31 | - | - | - | - |
| EHA | - | - | 19.83 | - | - | - | - | - |
| STY | - | - | 11.21 | 7.21 | - | - | - | - |
| LCMA | - | - | - | - | - | 3.99 | 3.99 | 8.03 |
| Wako V601 | 0.10 | 0.03 | 0.52 | 0.67 | 0.37 | 0.10 | 0.41 | 0.33 |
| α-MSTY | 0.10 | 0.03 | 9.52 | - | 0.38 | 0.10 | 0.42 | 0.34 |
| IPA | 24.37 | 21.79 | 208.96 | 104.33 | 90.25 | 104.79 | 104.18 | 90.34 |

The synthesis is exemplified for the polymeric dispersant POL-6, i.e. the statistical copolymer P(AA-c-BuA-c-MMA-c-LCMA).

In a 250 ml flask the following ingredients were successively added: 0.10 g WAKO™ V601 initiator, 104.79 g IPA, 14.94 g acrylic acid, 20.33 g butylacrylate, 5.74 g methyl methacrylate, 3.99 g decyl methacrylate and 0.10 g α-methylstyrene dimer. After addition to the flask the mixture was stirred and nitrogen gas was bubbled through the solution for 30 min. Then the reaction mixture was heated to 80°C at which temperature it was kept for 20 hours. After 20 hours, the reaction mixture was cooled to 20°C, precipitated into ice-water (1500 ml) and filtrated. The residue was dried for 48 hours at 35°C under vacuum. This resulted in 27.38 g of a white solid (ca. 60% yield).

The characterization of the polymeric dispersant POL-6 using GPC resulted in Mn = 2387 and Mw / Mn = 2.29 and using $^{13}$C-NMR the composition was analyzed to consist of: 44 mol% AA, 36 mol% BuA, 15 mol% MMA and 5 mol% LCMA.

The polymeric dispersants POL-1 to POL-5, POL-7 and POL-8 were prepared in a similar way as described for POL-6 but by using the amounts given by Table 2. The resulting composition of the polymeric dispersant is given by Table 3 and was determined by using $^{13}$C-NMR for the polymeric dispersants POL-3, POL-4 and POL-6 to POL-8 and by using $^1$H-NMR for the polymeric dispersants POL-1, POL-2 and POL-5.

**Table 3**

| mol% | POL-1 | POL-2 | POL-3 | POL-4 | POL-5 | POL-6 | POL-7 | POL-8 |
|---|---|---|---|---|---|---|---|---|
| **AA** | --- | --- | --- | --- | 49 | 44 | 45 | 40 |
| **MAA** | 43 | 31 | 26 | 35 | --- | --- | --- | --- |
| **MMA** | --- | --- | --- | --- | 14 | 15 | 15 | 16 |
| **BnMA** | 31 | 59 | 36 | --- | --- | --- | --- | --- |
| **BuMA** | 26 | --- | --- | 31 | --- | --- | --- | --- |
| **BuA** | --- | --- | --- | --- | 37 | 36 | 35 | 32 |
| **MPEGMA** | --- | 10 | 8 | 11 | --- | --- | --- | --- |
| **EHA** | --- | --- | 11 | --- | --- | --- | --- | --- |
| **Sty** | --- | --- | 19 | 23 | --- | --- | --- | --- |
| **LCMA** | --- | --- | --- | --- | --- | 5 | 5 | 12 |
| **Yield (g)** | 10.98 | 9.82 | 94.54 | 4.05 | 34.6 | 27.38 | 34.21 | 30.69 |
| **Mn** | 27191 | 65739 | 23790 | 24653 | 4918 | 6737 | 6685 | 8037 |

(continued)

| mol% | POL-1 | POL-2 | POL-3 | POL-4 | POL-5 | POL-6 | POL-7 | POL-8 |
|---|---|---|---|---|---|---|---|---|
| **Mw/Mn** | 2.67 | 5.04 | 2.27 | 2.50 | 2.68 | 2.95 | 2.38 | 2.25 |

EDAPLAN™ 482 available from MÜNZING CHEMIE was used as polymeric dispersant POL-9. EDAPLAN™ 482 contained about 6 mol% of a long aliphatic chain methacrylate (LCMA).

Preparation of the pigmented magenta inkjet ink

Each of the pigmented magenta inkjet inks was prepared by the same two steps. In a first step, a concentrated aqueous pigment dispersion was made by mixing the pigment Inkjet Magenta™, the polymeric dispersant and water in a 60 mL flask according to the formulation of **Table 4.**

**Table 4**

| Component | Concentration (wt%) |
|---|---|
| Inkjet Magenta™ | 5 |
| Polymeric dispersant | 3 |
| Water | 92 |

Each concentrated aqueous pigment dispersion was subjected to a wet dispersion treatment using a roller mill and 0.04 mm yttrium stabilized zirconium beads YTZ™ Grinding Media (available from TOSOH Corp.). The flask is filled to half its volume with the grinding beads and put onto the roller mill. The speed is set at 150 rotations per minute for three days. After milling, the dispersion is separated from the beads using a filter cloth.

The concentrated aqueous pigment dispersion served as the basis for the preparation of the pigmented inkjet ink. The inkjet inks were prepared by mixing the components according to the general formulation of Table 5 expressed in weight % based on the total weight of the ink.

**Table 5**

| Component | Magenta ink (wt%) |
|---|---|
| Inkjet Magenta™ | 2.7 |
| Polymeric dispersant | 1.6 |
| 1,2-propanediol | 21.0 |
| Glycerol | 7.0 |
| Water | to complete 100.0 wt% |

Evaluation

Using the above method, the comparative pigmented inkjet inks COMP-1 to COMP-6 and the inventive pigmented inkjet inks INV-1 to INV-3 were prepared according to **Table 6.** The spectral separation factor (SSF) was determined for each sample directly after preparation and was determined again after a severe heat treatment of 1 week at 80°C. The results are listed in **Table 6.**

**Table 6**

| Inkjet Ink | Polymeric Dispersant | SSF | % Reduction in SSF after 7days at 80°C |
|---|---|---|---|
| COMP-1 | POL-1 | 18 | 0% |
| COMP-2 | POL-2 | 3 | 0% |
| COMP-3 | POL-3 | 7 | 0% |
| COMP-4 | POL-4 | 18 | 0% |

(continued)

| Inkjet Ink | Polymeric Dispersant | SSF | % Reduction in SSF after 7days at 80°C |
|---|---|---|---|
| COMP-5 | POL-5 | 54 | 30% |
| INV-1 | POL-6 | 57 | 0% |
| INV-2 | POL-7 | 60 | 0% |
| COMP-6 | POL-8 | 16 | 0% |
| INV-3 | POL-9 | 72 | 0% |

From **Table 6**, it is clear that the comparative pigmented inkjet inks COMP-1 to COMP-5, prepared with a statistical copolymer free of a long aliphatic chain methacrylate, were low quality inkjet inks. Either the pigmented inkjet ink exhibited a small SSF (less than 30) or otherwise exhibited a high SSF but having no stability after an ageing test of one week at 80°C. The inventive pigmented inkjet inks INV-1 to INV-3 combined high image quality and high dispersion stability. However, pigmented inkjet inks containing the polymeric dispersant POL-8 with a composition containing more than 10 mol% of decyl methacrylate exhibited again a poor image quality.

**Example 2**

This example illustrates that the polymeric dispersants containing a long aliphatic chain (meth)acrylate not only have excellent dispersion stability but also are less sensitive to changes in the composition of the dispersion medium of the pigmented inkjet ink. These changes can occur when evaporation of volatile components in the inkjet ink is allowed, for example, in an open ink container or at the nozzle plate of the inkjet printhead. 1,2-Hexanediol was used to alter the composition in dispersion medium of the pigmented inkjet ink.

The comparative pigmented inkjet inks COMP-7 and COMP-8 and the inventive pigmented inkjet inks INV-4 and INV-5 were prepared by dilution with 5wt% of 1,2-hexanediol of the comparative pigmented inkjet inks COMP-5 and COMP-6 respectively the inventive pigmented inkjet inks INV-1 and INV-2 prepared for Example 1.

Evaluation

The average particle size for each of the comparative pigmented inkjet inks COMP-5 to COMP-8 and the inventive pigmented inkjet inks INV-1, INV-2, INV-4 and INV-5 were determined and are given by **Table 7.**

**Table 7**

| Polymeric Dispersant | Undiluted | | Diluted with 1,2-hexanediol | |
|---|---|---|---|---|
| | Inkjet ink | Particle size (nm) | Inkjet ink | Particle size (nm) |
| POL-5 | COMP-5 | 124 | COMP-7 | 185 |
| POL-6 | INV-1 | 141 | INV-4 | 123 |
| POL-7 | INV-2 | 135 | INV-5 | 117 |
| POL-8 | COMP-6 | 248 | COMP-8 | 290 |

From **Table 7** it is clear that only the inventive pigmented inkjet inks INV-1, INV-2, INV-4 and INV-5 exhibited average particle sizes of the dispersed particles smaller than 150 nm in both dispersion media having low or high concentration of 1,2-hexanediol.

**Claims**

1. A pigmented inkjet ink comprising a pigment and a polymeric dispersant wherein said polymeric dispersant is a statistical copolymer comprising between 3 and 11 mol% of a long aliphatic chain (meth)acrylate wherein the long aliphatic chain contains at least 10 carbon atoms.

2. A pigmented inkjet ink according to claim 1 wherein said long aliphatic chain (meth)acrylate is decyl (meth)acrylate.

3. A pigmented inkjet ink according to claim 1 or 2 wherein said polymeric dispersant further comprises at least 25 mol% n-butyl (meth)acrylate.

4. A pigmented inkjet ink according to any of the preceding claims wherein said polymeric dispersant further comprises at least 25 mol% (meth)acrylic acid.

5. A pigmented inkjet ink according to any of the preceding claims wherein said polymeric dispersant further comprises at least 5 mol% methyl (meth)acrylate.

6. A pigmented inkjet ink according to any of the preceding claims wherein said polymeric dispersant has a Mw smaller than 50000.

7. A pigmented inkjet ink according to any of the preceding claims wherein said pigment is a quinacridone.

8. A pigmented inkjet ink according to claim 7, wherein said quinacridone is C.I. Pigment Red 122 , C.I. Pigment Violet 19 or a mixture thereof.

9. An inkjet ink set comprising at least one pigmented inkjet ink according to any of the preceding claims.

10. A method for manufacturing a pigmented inkjet ink comprising the steps:

   a) providing a statistical copolymer comprising between 3 and 11 mol% of a long aliphatic chain (meth)acrylate wherein the long aliphatic chain contains at least 10 carbon atoms as a polymeric dispersant;
   b) providing a pigment; and
   c) precipitating or milling said pigment in a dispersion medium in the presence of said polymeric dispersant.


**Patentansprüche**

1. Eine pigmentierte Tintenstrahltinte, die ein Pigment und ein polymeres Dispersionsmittel enthält, **dadurch gekennzeichnet, dass** das polymere Dispersionsmittel ein statistisches Copolymer ist, das zwischen 3 mol-% und 11 mol-% eines (Meth)acrylats mit langer alifatischer Kette enthält, wobei die lange alifatische Kette zumindest 10 Kohlenstoffatome enthält.

2. Pigmentierte Tintenstrahltinte nach Anspruch 1, **dadurch gekennzeichnet, dass** das (Meth)acrylat mit langer alifatischer Kette Decyl(meth)acrylat ist.

3. Pigmentierte Tintenstrahltinte nach Anspruch 1 oder 2, **dadurch gekennzeichnet, dass** das polymere Dispersionsmittel ferner zumindest 25 mol-% n-Butyl(meth)acrylat enthält.

4. Pigmentierte Tintenstrahltinte nach einem der vorstehenden Ansprüche, **dadurch gekennzeichnet, dass** das polymere Dispersionsmittel ferner zumindest 25 mol-% (Meth)acrylsäure enthält.

5. Pigmentierte Tintenstrahltinte nach einem der vorstehenden Ansprüche, **dadurch gekennzeichnet, dass** das polymere Dispersionsmittel ferner zumindest 5 mol-% Methyl(meth)acrylat enthält.

6. Pigmentierte Tintenstrahltinte nach einem der vorstehenden Ansprüche, **dadurch gekennzeichnet, dass** das polymere Dispersionsmittel ein Molekulargewicht (Mw) unter 50.000 aufweist.

7. Pigmentierte Tintenstrahltinte nach einem der vorstehenden Ansprüche, **dadurch gekennzeichnet, dass** das Pigment ein Chinacridon ist.

8. Pigmentierte Tintenstrahltinte nach Anspruch 7, **dadurch gekennzeichnet, dass** das Chinacridon C.I. Pigment Red 122, C.I. Pigment Violet 19 oder ein Gemisch derselben ist.

9. Ein Satz von Tintenstrahltinten, der zumindest eine pigmentierte Tintenstrahltinte nach einem der vorstehenden Ansprüche enthält.

**10.** Ein die nachstehenden Schritte umfassendes Verfahren zur Herstellung einer pigmentierten Tintenstrahltinte :

a) Bereitstellen eines zwischen 3 mol-% und 11 mol-% eines (Meth)acrylats mit langer alifatischer Kette enthaltenden statistischen Copolymers als polymeres Dispersionsmittel, wobei die lange alifatische Kette zumindest 10 Kohlenstoffatome enthält,
b) Bereitstellen eines Pigments und
c) Fällen oder Zermahlen des Pigments in einem Dispersionsmedium in Gegenwart des polymeren Dispersionsmittels.

## Revendications

**1.** Une encre pour jet d'encre pigmentée contenant un pigment et un dispersant polymère, **caractérisée en ce que** le dispersant polymère est un copolymère statistique comprenant entre 3 moles % et 11 moles % d'un (méth)acrylate à longue chaîne aliphatique, la longue chaîne aliphatique comprenant au moins 10 atomes de carbone.

**2.** Encre pour jet d'encre pigmentée selon la revendication 1, **caractérisée en ce que** le (méth)acrylate à longue chaîne aliphatique est le (méth)acrylate de décyle.

**3.** Encre pour jet d'encre pigmentée selon la revendication 1 ou 2, **caractérisée en ce que** le dispersant polymère contient en outre au moins 25 moles % de (méth)acrylate de n-butyle.

**4.** Encre pour jet d'encre pigmentée selon l'une quelconque des revendications précédentes, **caractérisée en ce que** le dispersant polymère contient en outre au moins 25 moles % d'acide (méth) acrylique.

**5.** Encre pour jet d'encre pigmentée selon l'une quelconque des revendications précédentes, **caractérisée en ce que** le dispersant polymère contient en outre au moins 5 moles % de (méth)acrylate de méthyle.

**6.** Encre pour jet d'encre pigmentée selon l'une quelconque des revendications précédentes, **caractérisée en ce que** le dispersant polymère présente un poids moléculaire (Mw) inférieur à 50.000.

**7.** Encre pour jet d'encre pigmentée selon l'une quelconque des revendications précédentes, **caractérisée en ce que** le pigment est une quinacridone.

**8.** Encre pour jet d'encre pigmentée selon la revendication 7, **caractérisée en ce que** la quinacridone est choisie parmi le groupe composé de C.I. Pigment Red 122, de C.I. Pigment Violet 19 et d'un mélange de ceux-ci.

**9.** Un ensemble d'encres pour jet d'encre comprenant au moins une encre pour jet d'encre pigmentée selon l'une quelconque des revendications précédentes.

**10.** Un procédé pour la préparation d'une encre pour jet d'encre pigmentée, comprenant les étapes ci-après :

a) la mise à disposition comme dispersant polymère d'un copolymère statistique comprenant entre 3 moles % et 11 moles % d'un (méth)acrylate à longue chaîne aliphatique, où la longue chaîne aliphatique comprend au moins 10 atomes de carbone,
b) la mise à disposition d'un pigment et
c) la précipitation ou le broyage du pigment dans un milieu de dispersion en présence du dispersant polymère.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2157361, DU PONT
- US 6652634 B, LEXMARK
- US 6521715 B, DU PONT
- US 2004102541 A, LEXMARK
- US 5859113 A, DU PONT
- US 6413306 B, DU PONT
- US 5679138 A, KODAK

- US 5538548 A, BROTHER
- US 5443628 A, VIDEOJET SYSTEMS
- US 4836852 A, OLIVETTI
- US 5285064 A, EXTREL
- US 5184148 A, CANON
- US 5223026 A

**Non-patent literature cited in the description**

- **SPINELLI, HARRY J.** Polymeric Dispersants in Ink Jet Technology. *Advanced Materials,* 1998, vol. 10 (15), 1215-1218

- **HERBST, W et al.** Industrial Organic Pigments, Production, Properties, Applications. 1997
- Polymer Handbook. Wiley-Interscience, 1999, vol. 1 + 2